# EUROPÄISCHE PATENTSCHRIFT

(11) **EP 1 116 394 B1**
(45) Veröffentlichungstag und Bekanntmachung des Hinweises auf die Patenterteilung: **19.11.2008**
(21) Anmeldenummer: 99955766.3
(22) Anmeldetag: 22.09.1999
(51) Int. Cl.: H04Q 7/20

(54) **VERFAHREN ZUR FUNKVERSORGUNG EINES MOBILTERMINALS EINES MOBILFUNKNETZES**
METHOD FOR THE RADIO COVERAGE OF A MOBILE TERMINAL OF A MOBILE RADIOTELEPHONE NETWORK
PROCEDE DE COUVERTURE RADIO D'UN TERMINAL MOBILE D'UN RESEAU RADIOMOBILE

(30) Priorität: 22.09.1998 DE 19843476
(43) Veröffentlichungstag der Anmeldung: 18.07.2001
(73) Patentinhaber: Siemens Home and Office Communication Devices GmbH & Co. KG, 81379 München (DE)
(72) Erfinder: BOLINTH, Edgar, D-41189 Mönchengladbach (DE); SCHWARK, Uwe, D-46399 Bocholt (DE); KAMPERSCHROER, Erich, D-46499 Hamminkeln (DE); ARETZ, Kurt, D-46419 Isselburg (DE)
(86) Internationale Anmeldenummer: PCT/DE1999/003033
(87) Internationale Veröffentlichungsnummer: WO 2000/018152

(56) Entgegenhaltungen:
- EP-A- 0 719 064
- WO-A-96/38988
- DE-C- 19 532 635

## Beschreibung

Die Erfindung betrifft ein Verfahren zur Funkversorgung eines Mobil-Terminals eines Mobilfunknetzes im Einzugsbereich einer Zwischenstation gemäß dem Oberbegriff des Anspruches 1.

Die Teilnehmer eines solchen modernen Mobilfunknetzes sind derzeit an nahezu allen Orten der Welt erreichbar. Es besteht jedoch allgemein das Problem, daß für Teilnehmer die sich in ein größeres Gebäude begeben, aufgrund von Abschirmung durch Metallkonstruktionen oder Fensterfronten mit bedampften Fenstern, die Verbindung zum Mobilfunknetz abreißt. Bisher wird dieses Problem dadurch gelöst, daß innerhalb entsprechend großer, meist öffentlichen Gebäuden Basisstationen des Mobilfunknetzbetreibers installiert werden, so daß auch dieser Bereich durch das Mobilfunknetz selbst abgedeckt ist.

Diese Vorgehensweise birgt den Nachteil in sich, daß sie durch offiziell vergebene Frequenzen des Mobilfunknetzes verwendet werden müssen und die Basisstationen an das normale Festnetz des Mobilfunknetzbetreibers mit angeschlossen sein müssen.

Andererseits besteht auch die Möglichkeit Subsysteme einzusetzen, die im hausinternen Bereich mit Mobil-Terminal auf Frequenzen kommunizieren, die nicht zum öffentlichen Mobilfunknetz gehören. Bei diesen Systemen gestaltet sich die Kommunikation jedoch so, daß man rechtzeitig durch Wahl entweder eines entsprechenden Mobil-Terminals für die entsprechende Frequenz, oder - im Falle von Mobil-Terminals die über kombinierte Frequenzsysteme verfügen - durch Anwahl einer bestimmten Frequenz oder eines bestimmten Modus, entscheidet, ob man nun mit dem öffentlichen Mobilfunknetz in Verbindung tritt oder ob man mit einem hausinternen Schnurlos-Telekommunikationsnetz in Verbindung tritt. Nicht gelöst ist hierbei auf jeden Fall das Problem des Übergangs von einem öffentlichen Mobilfunknetz zu einem hausinternen Mobilfunknetz.

Aus der DE 195 32 635 ist ein digitales Telefonsystem zur drahtlosen Telekommunikation mit einer Feststation, einem mobilen Handaparat und einer Regenerator-Umsetzer-Einrichtung bekannt, bei dem dem mobilen Handaparat sowohl erste Frequenzen eines ersten Frequenzbandes und zweite Frequenzen eines zu dem ersten Frequenzband disjunkten zweiten Frequenzband zegewiesen werden kann und die Regenerator-Umsetzer-Einrichtung mit einer ersten und einer zweiten Funkschnittstelle vorgesehen ist, wobei der ersten Funkschnittstelle erste Frequenzen und der zweiten Funkschnittstelle zweite Frequenzen zuweisbar sind und wobei die erste Funkschnittstelle die Funktionalität eines mobilen Handaparates und die zweite Funkschnittstelle die Funktionalität einer Feststation aufweist.

Es ist daher Aufgabe der Erfindung, ein Verfahren anzugeben, welches das Problem des Übergangs von einem öffentlichen Mobilfunknetz zu einem hausinternen Mobilfunknetz beschreibt, wobei eine Fallunterscheidung bezüglich des Eintritts und des Austritts in den hausinternen Empfangsbereich, als auch des Neuaufbaus einer Verbindung im hausinternen Bereich zum Mobilfunknetz vorzunehmen ist.

Die Aufgabe der Erfindung wird, je nach vorliegendem Fall, durch die Merkmale eines der Ansprüche 1 oder 2 gelöst.

Gemäß dem Anspruch 1 wird vorgeschlagen, ein Verfahren zur Funkversorgung eines Mobil-Terminals eines Mobilfunknetzes gemäß dem Oberbegriff des Anspruches 1 dahingehend zu verbessern, daß, im Falle einer bestehenden Verbindung zwischen dem Mobilfunknetz und einem Mobil-Terminal, das sich dem internen Empfangsbereich einer Zwischenstation nähert, zwischen diesem Mobil-Terminal und dieser Zwischenstation zunächst auf der Internfrequenz eine Verbindung aufgebaut wird, durch welche die Individualmerkmale des Mobil-Terminals an die Zwischenstation übergeben werden und anschließend eine Übergabe der Verbindung zwischen Mobil-Terminal und Mobilfunknetz stattfindet, durch die eine Verbindung vom Mobilfunknetz über die Zwischenstation zur Mobilstation entsteht. Diese Verfahrensschritte berücksichtigen also die Situation eines Mobil-Terminals, welches beim Eintritt in den internen Empfangsbereich einer Zwischenstation bereits mit dem Mobilfunknetz kommuniziert.

Im Verfahren gemäß Anspruch 2 wird im Gegensatz hierzu die Situation berücksichtigt, wenn ein Mobil-Terminal eine Verbindung zum Mobilfunknetz über eine Zwischenstation aufgebaut hat und nun den internen Empfangsbereich der Zwischenstation verläßt. Demgemäß wird das Verfahren gemäß dem Oberbegriff des Anspruches 1 dahingehend fortgebildet, daß im Fall einer bestehenden Verbindung von einem Mobil-Terminal über eine Zwischenstation zum Mobilfunknetz die .Zwischenstation ein Entfernen des Mobil-Terminals aus dem internen Empfangsbereich der Zwischenstation detektiert, dem Mobil-Terminal die Frequenz und Verbindungsinformationen zum Mobilfunknetz weitergibt und anschließend eine Übergabe der Verbindung Mobilfunknetz-Zwischenstation-Mobil-Terminal zur Verbindung Mobilfunknetz-Mobil-Terminal stattfindet.

Entsprechend dem Erfindungsgedanken wird auch das Verfahren gemäß dem Anspruch 1 dahingehend verbessert, daß im Falle eines neuen Aufbaues einer Verbindung vom Mobil-Terminal zum Mobilfunknetz zum Verbindungsaufbau das Mobil-Terminal zunächst oder, nach einem erfolglosen Verbindungsaufbauversuch mit einer Mobilfunkfrequenz, auf einer Internfrequenz versucht Verbindung zu einer Zwischenstation herzustellen.

Erfindungsgemäß können die Verbindungen beispielsweise nach dem TDMA-Verfahren (TDMA = Time Division Multiple Access) und/oder dem FDMA-Verfahren (FDMA = Frequency Division Multiple Access) und/oder CDMA-Verfahren (CDMA = Code Division Multiple Access) arbeiten.

Gemäß einer vorteilhaften Weiterbildung des oben beschriebenen Verfahrens wird vorgeschlagen, daß die Zwischenstation eine Konvertierung eines eingehenden Signals nach dem FDD-Verfahren (FDD = Frequenz Division Duplex) auf ein ausgehendes Signal nach dem TDD-Verfahren (TDD = Time Division Duplex) vornimmt und andererseits ein eingehendes Signal nach dem TDD-Verfahren auf ein ausgehendes Signal nach dem FDD-Verfahren konvertiert. In der Regel wird es sich bei dem eingehenden Signal nach dem FDD-Verfahren um ein Signal des Mobilfunknetzes handeln, während das Signal nach dem TDD-Verfahren dem hausinternen Funknetz zugeordnet sein wird.

Eine weitere vorteilhafte Ausgestaltung des erfindungsgemäßen Verfahrens besteht darin, daß vor der Übernahme einer Verbindung durch die Zwischenstation zwischen dem Mobil-Terminal und der Zwischenstation ein Austausch einer PIN (= Persönliche Identifikations-Nummer) stattfindet und daß die Übernahmeprozedur nur dann eingeleitet wird, wenn das Mobil-Terminal aufgrund der PIN berechtigt ist. Hierzu ist natürlich Voraussetzung, daß die Zwischenstation über einen Datenspeicher verfügt, in dem die PIN's der berechtigten Teilnehmer abgelegt sind.

Zur Detektion eines sich nähernden Mobil-Terminals kann es vorteilhaft sein, wenn die Zwischenstation periodisch die mindestens eine Internfrequenz nach einer von einem sich nähernden Mobil-Terminal gesendeten Nachricht abhorcht. Es ist selbstverständlich, daß zur Durchführung dieses Verfahrens das Mobil-Terminal auch entsprechende Nachrichten periodisch aussenden muß.

Im umgekehrten Falle kann es auch vorteilhaft sein, wenn zur Detektion des Eindringens eines Mobil-Terminals in den internen Empfangsbereich der Zwischenstation, das Mobil-Terminal selbst die Internfrequenz in periodischen Abständen auf von einer Zwischenstation gesendeten Nachrichten abhorcht. Hierzu ist es wiederum notwendig, daß die entsprechenden Zwischenstationen derartige Nachrichten in periodischen Abständen über ihre Internfrequenz absendet.

Eine weitere vorteilhafte Ausgestaltung des Verfahrens kann darin bestehen, daß die Zwischenstation zur Detektion der Auswanderung des Mobil-Terminals aus dem internen Empfangsbereich die bei der Kommunikation zwischen Zwischenstation und Mobil-Terminal auftretende Bit-Fehlerrate auswertet und bei der Überschreitung eines vorgegebenen Wertes eine Auswanderung des Mobil-Terminals annimmt.

Eine andere vorteilhafte Ausgestaltung des Verfahrens bezüglich der Detektion der Auswanderung des Mobil-Terminals aus dem internen Empfangsbereich einer Zwischenstation, kann darin bestehen, daß die Zwischenstation in regelmäßigen Abständen oder kontinuierlich die Sende- und Empfangsleistung des Mobil-Terminals mißt und bei einem Unterschreiten eines bestimmten Pegels von einer Auswanderung des Mobil-Terminals aus dem internen Empfangsbereich ausgeht.

Weitere vorteilhafte Ausgestaltungen des Verfahrens können beispielsweise darin bestehen, daß die Zwischenstation zusätzlich zu ihrer Verbindung mit dem Mobilfunknetz auch mit einem Festnetz kommuniziert. Dies kann beispielsweise ein ISDN-Netz (Integrated Services Digital Network) oder ein PSTN-Netz (PSTN = Public Switched Telephone Network) sein.

Vorteilhaft bei einer Kommunikation der Zwischenstation mit einem Festnetz und einem Funknetz ist es auch, wenn die Zwischenstation zwischen beiden Netzen entweder selbständig umschalten kann oder auf Anforderung durch das Mobil-Terminal umschaltet.

Als Mobilfunknetz kommt derzeit beispielsweise ein GSM-Netz (GSM = Global System for Mobile Communications) oder ein UMTS-Netz (UMTS = Universal Mobile Telecommunication System) in Frage. Für die konkrete Realisierung des Verfahrens, beispielsweise in einem GSM-Netz, ist es notwendig, einige bislang noch verfügbare GSM-Frequenzen für den hausinternen Bereich zur Verfügung zu stellen. Im Falle eines UMTS-Netzes kann davon ausgegangen werden, daß von vornherein einige Frequenzen für den hausinternen Bereich bereitgestellt werden. Der Vorteil, der sich durch die Bereitstellung derartiger hausinterner Frequenzen ergibt liegt darin, daß die Frequenzplanung für den externen Bereich in keiner Weise beeinflußt wird. Ein weiterer Vorteil des dargestellten Verfahrens liegt darin, daß die Zwischenstation mit den GSM/UMTS-Basisstationen nur über eine Luftschnittstelle in Verbindung steht und gegenüber dieser Basisstation lediglich ein Mobil-Terminal simuliert. Auf diese Weise bleibt die übrige Netzinfrastruktur völlig frei von Rückwirkungen, wodurch sich ein entsprechendes Verfahren auch kostenneutral für die Betreiber der Mobilfunknetze integrieren läßt.

Weitere Ausgestaltungen, zusätzliche Merkmale und Vorteile der Erfindung ergeben sich aus der nachfolgenden Beschreibung bevorzugter Ausführungsbeispiele unter Bezugnahme auf die Zeichnungen und aus den Unteransprüchen.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Die Erfindung soll nachfolgend, anhand der Zeichnungen, näher erläutert werden. Es stellen dar:
- Figur 1:: Konverterlösung zur Verbesserung der hausinternen Mobilfunkversorgung;
- Figur 2:: Konverterlösung mit zusätzlicher Verbindung zum Festnetz.

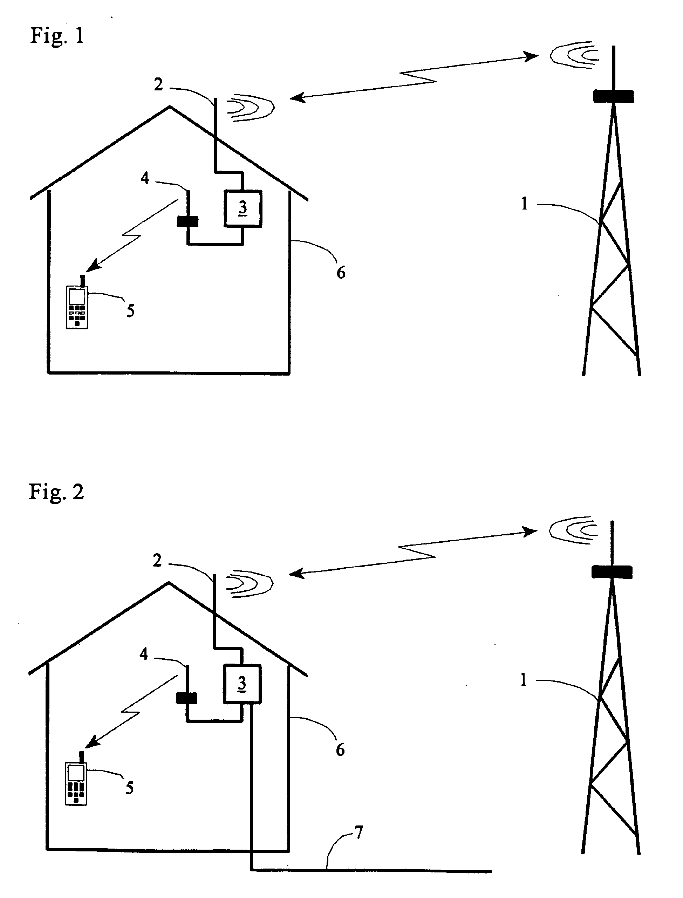

Die Figur 1 zeigt einen schematischen Ausschnitt eines Mobilfunknetzes mit einer Basisstation 1 und einem Privatgebäude 6, welches zur Durchführung des erfindungsgemäßen Verfahrens geeignet ist. Die Basisstation 1 kann beispielsweise eine GSM-Basisstation oder eine UMTS-Basisstation sein, in deren Sende-/Empfangsbereich sich ein Privatgebäude 6 befindet. Das Privatgebäude 6 ist mit einer Zwischenstation 3 ausgerüstet, die einerseits eine außenliegende Antenne 2 aufweist, mit der sie über eine Externfrequenz mit dem Mobilfunknetz, das heißt mit der Basisstation 1 in Verbindung treten kann. Innerhalb des Gebäudes befindet sich, mit Anschluß an die Zwischenstation 3, eine weitere Antenne 4 für die Internfrequenz. Mit der Internfrequenz wird der hausinterne Bereich versorgt, so daß darin befindliche Mobil-Terminals 5 über diese Antenne mit den Mobilfunknetz über die Zwischenstation 3 in Kontakt treten können. Der Sende/Empfangsbereich der Internfrequenz reicht, je nach Abschirmungsverhältnissen, meist bis in die unmittelbare Umgebung des Gebäudes.

Entsprechend dem erfindungsgemäßen Verfahren detektiert die Zwischenstation 3 über die Internfrequenz ein sich dem Gebäude 6 näherndes Mobil-Terminal 5. Sobald die Zwischenstation mit dem Mobil-Terminal 5 auf der Internfrequenz Verbindung aufgenommen hat, werden mobilterminal-spezifische und netzspezifische Daten, wie beispielsweise die benutzte externe Übertragungsfrequenz, Timing Advance, Framenumber, TX-Power, oder die PIN ausgetauscht, so daß die Zwischenstation eine Übergabe der Verbindung von Basisstation 1 zum Mobil-Terminal 5 auf die Verbindung Basisstation 1 über die Zwischenstation 3 zum Mobil-Terminal 5 durchführen kann.

Vorzugsweise betreibt die Zwischenstation 3 eine Konvertierung des empfangenen externen Signals im FDD-Verfahren auf das interne Signal, welches über die Antenne 4 ausgesendet wird im TDD-Verfahren.

Hat die Zwischenstation die Verbindung übernommen, so simuliert sie gegenüber der Basisstation 1 ein Mobil-Terminal, welches die gleichen Individualmerkmale aufweist, wie das sich nun im Innenbereich des Gebäudes 6 befindende Mobil-Terminal 5. Verläßt das Mobil-Terminal 5 den Innenbereich des Gebäudes 6 und damit den internen Empfangsbereich der Zwischenstation 3, so wird dieses von der Zwischenstation detektiert. Dies kann beispielsweise durch eine Bit-Fehlerraten-Bestimmung oder durch einen Vergleich der Sendeempfangsleistung des Mobil-Terminals geschehen. Beim Austreten des Mobil-Terminals aus dem internen Empfangsbereich der Zwischenstation 3 wird wiederum die Verbindung, die ursprünglich von der Basisstation 1 über die Zwischenstation 3 zum Mobil-Terminal 5 führte, nun zurück übergeben, so daß eine direkte Verbindung Basisstation 1 zum Mobil-Terminal 5 entsteht.

Ein weiteres Szenario kann dadurch entstehen, daß sich ein Mobil-Terminal 5 innerhalb des Gebäudes 6 aufhält und zunächst keine Verbindung zum Mobilfunknetz aufgebaut hat. In diesem Fall wird das Terminal 5 beim Versuch des Verbindungsaufbaus zunächst entweder sofort mit der Internfrequenz Verbindung mit der Zwischenstation aufnehmen oder nach einem erfolglosen Versuch auf der Externfrequenz danach zur Internfrequenz überwechseln und auf diese Weise Verbindung zur Zwischenstation aufnehmen. Anschließend übergibt das Mobil-Terminal 5 der Zwischenstation 3 seine individuellen Daten, so daß die Zwischenstation 3 in die Lage versetzt wird, gegenüber der Basisstation 1 das Mobil-Terminal 5 selbst zu simulieren. Es entsteht also wiederum eine Verbindung vom Mobil-Terminal 5 über die Zwischenstation 3 zur Basisstation 1, wobei vorzugsweise die Zwischenstation als Konverter zwischen dem TDD- und dem FDD-Verfahren wirkt.

Die Figur 2 zeigt eine Erweiterung der Situation aus der Figur 1, wobei hier die Zwischenstation 3 eine zusätzliche Verbindung 7 zu einem Fest-Telekommunikationsnetz aufweist. Bei dem Festnetz kann es sich zur Zeit beispielsweise um ein PSTN- oder ISDN-Telefonnetz handeln. Bezüglich des Verfahrens bei einer Annäherung oder beim Entfernen des Mobil-Terminals 5 an das Gebäude besteht kein Unterschied zu dem unter Figur 1 geschilderten Verfahren. Zusätzlich kann in diesem Beispiel jedoch eine Verbindung vom Mobil-Terminal 5 über die Zwischenstation 3 zu einem Festnetz über die Verbindung 7 hergestellt werden. Die Entscheidung über welches Telekommunikationsnetz eine Verbindung, die vom Mobil-Terminal 5 aus aufgebaut wird, hergestellt wird, kann entweder durch den Benutzer selbst getroffen werden oder auch über eine entsprechende automatische Auswahl der Zwischenstation 3 vorgenommen werden. Auf jeden Fall besteht auf diese Weise für den Nutzer eines Mobil-Terminals 5 die Möglichkeit sowohl über das Festnetz, als auch über das Mobilfunknetz von außen erreichbar zu sein.

Das erfindungsgemäße Verfahren ermöglicht also den Übergang von einem öffentlichen Mobilfunknetz zu einem hausinternen Mobilfunknetz, wobei je nach Situation, nämlich Eintritt des Mobil-Terminals in den hausinternen Empfangsbereich oder dem Austritt aus dem hausinternen Empfangsbereich bei bestehender Verbindung zum Mobilfunknetz, oder auch dem Neuaufbau einer Verbindung im hausinternen Bereich, ein unterschiedliches Verfahren zur Verbindungsübergabe vorgeschlagen wird.

## Patentansprüche

1. Verfahren zur Funkversorgung eines Mobil-Terminals (5) eines Mobilfunknetzes im Einzugsbereich einer Zwischenstation (3) (Konverter), welche mit mindestens einer Basisstation (1) kommunizieren kann, wobei die Zwischenstation (3) und das Mobil-Terminal (5) mindestens eine Frequenz des Mobilfunknetzes mit einem externen Empfangsbereich und mindestens eine weitere Internfrequenz mit einem internen Empfangsbereich, die nicht als Verbindungsfrequenz des Mobilfunknetzes genutzt wird, betreiben und die Zwischenstation (3) gegenüber dem Mobilfunknetz ein Mobil-Terminal (5) auf einer Mobilfunkfrequenz simuliert und gleichzeitig über eine Internfrequenz mit dem Mobil-Terminal (5) kommuniziert, **dadurch gekennzeichnet, daß** im Falle einer bestehenden Verbindung zwischen der Basistation (1) und einem Mobil-Terminal (5) das sich dem Empfangsbereich einer Zwischenstation (3) nähert, zwischen diesem Mobil-Terminal (5) und dieser Zwischenstation (3) zunächst auf der Internfrequenz eine Verbindung aufgebaut wird, durch welche die Individualmerkmale des Mobil-Terminals (5) an die Zwischenstation (3) übergeben werden und anschließend eine Übergabe der Verbindung zwischen Mobil-Terminal (5) und Mobilfunknetz stattfindet, durch die eine Verbindung vom Mobilfunknetz über die Zwischenstation (3) zum Mobil-Terminal (5) entsteht.

2. Verfahren gemäß dem Oberbegriff des Anspruches 1 oder gemäß Anspruch 1, **dadurch gekennzeichnet, daß** im Falle einer bestehenden Verbindung von einem Mobil-Terminal (5) über eine Zwischenstation (3) zum Mobilfunknetz, die Zwischenstation (3) ein Entfernen des Mobil-Terminals (5) aus dem internen Empfangsbereich der Zwischenstation (3) detektiert, dem Mobil-Terminal (5) die Frequenz und Verbindungsinformationen zum Mobilfunknetz weitergibt und anschließend eine Übergabe der Verbindung Mobilfunknetz-Zwischenstation-Mobil-Terminal zur Verbindung Mobilfunknetz-Mobil-Terminal stattfindet.

3. Verfahren gemäß einem der Ansprüche 1-2, **dadurch gekennzeichnet, daß** im Falle eines neuen Aufbaues einer Verbindung vom Mobil-Terminal (5) zum Mobilfunknetz zum Verbindungsaufbau das Mobil-Terminal (5) zunächst oder nach einem erfolglosen Verbindungsaufbauversuch mit einer Mobilfunkfrequenz auf einer Internfrequenz versucht Verbindung zu einer Zwischenstation (3) herzustellen.

4. Verfahren gemäß einem der vorstehenden Ansprüche, **dadurch gekennzeichnet, daß** die Verbindungen nach dem TDMA-Verfahren (TDMA = Time Division Multiple Access) und/oder dem FDMA-Verfahren (FDMA = Frequency Division Multiple Access) und/oder CDMA-Verfahren (CDMA = Code Division Multiple Access) Verfahren arbeiten.

5. Verfahren gemäß Anspruch 4, **dadurch gekennzeichnet, daß** die Zwischenstation (3) mindestens eine Konvertierung zwischen dem TDMA-Verfahren und/oder FDMA-Verfahren und/oder CDMA-Verfahren beim Übergang von Externfrequenz zu Internfrequenz und umgekehrt durchführt.

6. Verfahren gemäß einem der vorstehenden Ansprüche, **dadurch gekennzeichnet, daß** die Zwischenstation (3) eine Konvertierung eines eingehenden Signals nach dem FDD-Verfahren (FDD = Frequenz Division Duplex) auf ein ausgehenden Signal nach dem TDD-Verfahren (TDD = Time Division Duplex) und umgekehrt vornimmt.

7. Verfahren gemäß einem der vorstehenden Ansprüche, **dadurch gekennzeichnet, daß** die Verbindung Mobilfunknetz-Zwischenstation nach dem FDD-Verfahren und die Verbindung Zwischenstation-Mobil-Terminal nach dem TDD-Verfahren betrieben wird.

8. Verfahren gemäß einem der vorstehenden Ansprüche, **dadurch gekennzeichnet , daß** vor der Übernahme einer Verbindung durch die Zwischenstation (3) der Austausch einer PIN stattfindet und nur bei einer berechtigten PIN die Übernahmeprozedur eingeleitet wird.

9. Verfahren gemäß einem der vorstehenden Ansprüche, **dadurch gekennzeichnet , daß** die Zwischenstation (3) zur Detektion eines sich nähernden Mobil-Terminals (5) periodisch die mindestens eine Internfrequenz nach einer von einem sich nähernden Mobil-Terminal (5) gesendeten Nachricht, die gegebenenfalls Mobil-Terminal-spezifische Informationen enthält, abhorcht.

10. Verfahren gemäß einem der vorstehenden Ansprüche, **dadurch gekennzeichnet , daß** zur Detektion des Eindringens eines Mobil-Terminals in den internen Empfangsbereich der Zwischenstation (3) das Mobil-Terminal (5) die Internfrequenz in periodischen Abständen auf von einer Zwischenstation (3) gesendete Nachrichten abhorcht.

11. Verfahren gemäß einem der vorstehenden Ansprüche, **dadurch gekennzeichnet , daß** zur Detektion eines sich der Zwischenstation (3) nähernden Mobil-Terminals (5) eine auf Initiierung des Nutzers für eine beschränkte Dauer mehrmalig gesendete Nachricht ist, die Mobil-Terminal-spezifische Informationen enthält.

12. Verfahren gemäß einem der vorstehenden Ansprüche, **dadurch gekennzeichnet , daß** die Zwischenstation (3) zur Detektion der Auswanderung des Mobil-Terminals aus dem internen Empfangsbereich die auftretende Bit-Fehlerrate benutzt.

13. Verfahren gemäß einem der vorstehenden Ansprüche, **dadurch gekennzeichnet , daß** die Zwischenstation (3) zur Detektion der Auswanderung des Mobil-Terminals (5) die Veränderung von gemessenen Sende/Empfangsleistungen benutzt.

14. Verfahren gemäß einem der vorstehenden Ansprüche, **dadurch gekennzeichnet, daß** das Mobilfunknetz ein GSM-Netz (GSM = Global System for Mobile Communications) ist.

15. Verfahren gemäß einem der vorstehenden Ansprüche, **dadurch gekennzeichnet, daß** das Mobilfunknetz ein UMTS-Netz (UMTS = Universal Mobile Telecommunication System) ist.

16. Verfahren gemäß einem der vorstehenden Ansprüche, **dadurch gekennzeichnet, daß** die Kommunikation auf den Internfrequenzen nach dem DECT-Prinzip abgewickelt wird.

17. Verfahren gemäß einem der vorstehenden Ansprüche, **dadurch gekennzeichnet, daß** die Zwischenstation (3) zusätzlich mit einem Festnetz kommuniziert.

18. Verfahren gemäß einem der vorstehenden Ansprüche, **dadurch gekennzeichnet, daß** die Zwischenstation (3) zwischen Festnetz und Funknetz umschalten kann.

19. Verfahren gemäß einem der Ansprüche 17-18, **dadurch gekennzeichnet, daß** das Festnetz ein ISDN-Netz (ISDN = Integrated Services Digital Network) ist.

20. Verfahren gemäß einem der Ansprüche 17-18, **dadurch gekennzeichnet, daß** das Festnetz ein PSTN-Netz (PSTN = Public Switched Telephone Network) ist.

## Claims

1. Method for the radio coverage of a mobile terminal (5) of a mobile radio network in the catchment area of an intermediate station (3) (converter), which can communicate with at least one base station (1), the intermediate station (3) and the mobile terminal (5) operating at least one frequency of the mobile radio network with an external area of reception and at least one further internal frequency with an internal area of reception which is not used as the connection frequency of the mobile radio network and the intermediate station (3) simulating to the mobile radio network a mobile terminal (5) on a mobile radio frequency and at the same time communicating with the mobile terminal (5) via an internal frequency, **characterized in that**, in the case of an existing connection between the base station (1) and a mobile terminal (5) which is approaching the area of reception of an intermediate station (3), a connection is first set up between this mobile terminal (5) and this intermediate station (3) on the internal frequency, by means of which connection the individual features of the mobile terminal (5) are handed over to the intermediate station (3) and then a handover of the connection takes place between mobile terminal (5) and mobile radio network by means of which a connection is established from the mobile radio network via the intermediate station (3) to the mobile terminal (5).

2. Method according to the preamble of Claim 1 or according to Claim 1, **characterized in that**, in the case of an existing connection from a mobile terminal (5) via an intermediate station (3) to the mobile radio network, the intermediate station (3) detects a removal of the mobile terminal (5) from the internal area of reception of the intermediate station (3), forwards the frequency and connection information to the mobile radio network to the mobile terminal (5) and then a handover of the mobile radio network-intermediate station-mobile terminal connection to the mobile radio network-mobile terminal connection takes place.

3. Method according to one of Claims 1-2, **characterized in that**, in the case when a new connection is set up from the mobile terminal (5) to the mobile radio network, for setting up the connection, the mobile terminal (5) first, or after an unsuccessful connection set-up attempt with a mobile radio frequency, attempts to establish a connection to an intermediate station (3) on an internal frequency.

4. Method according to one of the preceding claims, **characterized in that** the connections operate in accordance with the TDMA (Time Division Multiple Access) method and/or the FDMA (Frequency Division Multiple Access) method and/or CDMA (Code Division Multiple Access) method.

5. Method according to Claim 4, **characterized in that** the intermediate station (3) performs at least one conversion between the TDMA method and/or FDMA method and/or CDMA method on transition from the external frequency to the internal frequency and conversely.

6. Method according to one of the preceding claims, **characterized in that** the intermediate station (3) performs a conversion of an incoming signal according to the FDD (Frequency Division Duplex) method to an outgoing signal according to the TDD (Time Division Duplex) method and conversely.

7. Method according to one of the preceding claims, **characterized in that** the mobile radio network-intermediate station connection is operated in accordance with the FDD method and the intermediate station-mobile terminal connection is operated in accordance with the TDD method.

8. Method according to one of the preceding claims, **characterized in that**, before a connection is taken over by the intermediate station (3), the exchange of a PIN takes place and the handover procedure is only initiated in the case of an authorized PIN.

9. Method according to one of the preceding claims, **characterized in that** the intermediate station (3), to detect an approaching mobile terminal (5) periodically monitors the at least one internal frequency for a message sent by an approaching mobile terminal (5) which possibly contains mobile-terminal-specific information.

10. Method according to one of the preceding claims, **characterized in that**, to detect the penetration of a mobile terminal into the internal area of reception of the intermediate station (3), the mobile terminal (5) monitors the internal frequency periodically for messages sent by an intermediate station (3).

11. Method according to one of the preceding claims, **characterized in that**, for the detection of a mobile terminal (5) approaching the intermediate station (3), a message transmitted several times for a restricted period on initiation of the user is used which contains mobile-terminal-specific information.

12. Method according to one of the preceding claims, **characterized in that** the intermediate station (3) uses the bit error rate occurring for detecting the migration of the mobile terminal out of the internal area of reception.

13. Method according to one of the preceding claims, **characterized in that** the intermediate station (3) uses the change in measured transmit/receive powers for detecting the migration of the mobile terminal (5).

14. Method according to one of the preceding claims, **characterized in that** the mobile radio network is a GSM (Global System for Mobile Communications) network.

15. Method according to one of the preceding claims, **characterized in that** the mobile radio network is a UMTS (Universal Mobile Telecommunication System) network.

16. Method according to one of the preceding claims, **characterized in that** the communication on the internal frequencies is handled in accordance with the DECT principle.

17. Method according to one of the preceding claims, **characterized in that** the intermediate station (3) additionally communicates with a landline network.

18. Method according to one of the preceding claims, **characterized in that** the intermediate station (3) can switch between landline network and radio network.

19. Method according to one of Claims 17-18, **characterized in that** the landline network is an ISDN (Integrated Services Digital Network).

20. Method according to one of Claims 17-18, **characterized in that** the landline network is a PSTN (Public Switched Telephone Network).

## Revendications

1. Procédé pour la couverture radio d'un terminal mobile (5) d'un réseau de téléphonie mobile dans la zone d'entrée d'une station intermédiaire (3) (convertisseur), qui peut communiquer avec au moins une station de base (1), la station intermédiaire (3) et le terminal mobile (5) exploitant au moins une fréquence du réseau de téléphonie mobile avec une zone de réception externe et au moins une autre fréquence interne avec une zone de réception interne, qui n'est pas utilisée comme fréquence de liaison du réseau de téléphonie mobile, et la station intermédiaire (3) simulant par rapport au réseau de téléphonie mobile un terminal mobile (5) sur une fréquence radio mobile et communiquant en même temps par une fréquence interne avec le terminal mobile (5), **caractérisé en ce que**, dans le cas d'une liaison existante entre la station de base (1) et un terminal mobile (5) qui se rapproche de la zone de réception d'une station intermédiaire (3), une liaison est établie entre ce terminal mobile (5) et cette station intermédiaire (3) d'abord sur la fréquence interne, liaison par laquelle les caractéristiques individuelles du terminal mobile (5) sont transmises à la station intermédiaire (3) et une transmission de la liaison est ensuite effectuée entre le terminal mobile (5) et le réseau de téléphonie mobile, par laquelle une liaison se forme entre le réseau de téléphonie mobile et le terminal mobile (5) via la station intermédiaire (3).

2. Procédé selon le préambule de la revendication 1 ou selon la revendication 1, **caractérisé en ce que** dans le cas d'une liaison existante entre un terminal mobile (5) et le réseau de téléphonie mobile via une station intermédiaire (3), la station intermédiaire (3) détecte un enlèvement du terminal mobile (5) de la zone de réception interne de la station intermédiaire (3), transmet au terminal mobile (5) la fréquence et des informations de liaison au réseau de téléphonie mobile et ensuite un transfert de la liaison réseau de téléphonie mobile - station intermédiaire - terminal mobile à la liaison réseau de téléphonie mobile - terminal mobile a lieu.

3. Procédé selon l'une quelconque des revendications 1 et 2, **caractérisé en ce que**, dans le cas d'un nouvel établissement d'une liaison entre le terminal mobile (5) et le réseau de téléphonie mobile pour l'établissement de la liaison, le terminal mobile (5) tente d'abord ou après une tentative d'établissement de liaison sans succès avec une fréquence de téléphonie mobile sur une fréquence interne d'établir une liaison avec une station intermédiaire (3).

4. Procédé selon l'une quelconque des revendications précédentes, **caractérisé en ce que** les liaisons travaillent selon le procédé TDMA (TDMA = Time Division Multiple Access) et/ou le procédé FDMA (FDMA = Frequency Division Multiple Access) et/ou le procédé CDMA (CDMA = Code Division Multiple Access).

5. Procédé selon la revendication 4, **caractérisé en ce que** la station intermédiaire (3) effectue au moins une conversion entre le procédé TDMA et/ou le procédé FDMA et/ou le procédé CDMA lors du transfert de la fréquence externe à la fréquence interne et inversement.

6. Procédé selon l'une quelconque des revendications précédentes, **caractérisé en ce que** la station intermédiaire (3) effectue une conversion d'un signal entrant selon le procédé FDD (FDD = Frequenz Division Duplex) sur un signal sortant selon le procédé TDD (TDD = Time Division Duplex) et inversement.

7. Procédé selon l'une quelconque des revendications précédentes, **caractérisé en ce que** la liaison réseau de téléphonie mobile - station intermédiaire est exploitée selon le procédé FDD et la liaison station intermédiaire - terminal mobile selon le procédé TDD.

8. Procédé selon l'une quelconque des revendications précédentes, **caractérisé en ce que** l'échange d'un PIN a lieu avant la prise en charge d'une liaison par la station intermédiaire (3) et la procédure de prise en charge est amorcée uniquement dans le cas d'un PIN autorisé.

9. Procédé selon l'une quelconque des revendications précédentes, **caractérisé en ce que** la station intermédiaire (3) écoute, de façon périodique pour la détection d'un terminal mobile (5) qui se rapproche, une fréquence interne au nombre minimum de un selon un message envoyé par un terminal mobile (5) qui se rapproche, qui contient le cas échéant des informations spécifiques au terminal mobile.

10. Procédé selon l'une quelconque des revendications précédentes, **caractérisé en ce que**, pour la détection de la pénétration d'un terminal mobile dans la zone de réception interne de la station intermédiaire (3), le terminal mobile (5) écoute la fréquence interne à des intervalles périodiques au niveau des messages envoyés par une station intermédiaire (3).

11. Procédé selon l'une quelconque des revendications précédentes, **caractérisé en ce que**, pour la détection d'un terminal mobile (5) se rapprochant de la station intermédiaire (3), on a un message envoyé plusieurs fois sur l'initiative de l'utilisateur pour une durée limitée, qui contient des informations spécifiques au terminal mobile.

12. Procédé selon l'une quelconque des revendications précédentes, **caractérisé en ce que** la station intermédiaire (3) utilise le taux d'erreur binaire qui apparaît pour la détection de la sortie au terminal mobile de la zone de réception interne.

13. Procédé selon l'une quelconque des revendications précédentes, **caractérisé en ce que** la station intermédiaire (3) utilise pour la détection de la sortie du terminal mobile (5) la variation de puissances d'émission/réception mesurées.

14. Procédé selon l'une quelconque des revendications précédentes, **caractérisé en ce que** le réseau de téléphonie mobile est un réseau GSM (GSM = Global System for Mobile Communications).

15. Procédé selon l'une quelconque des revendications précédentes, **caractérisé en ce que** le réseau de téléphonie mobile est un réseau UMTS (UMTS = Universal Mobile Telecommunication System).

16. Procédé selon l'une quelconque des revendications précédentes, **caractérisé en ce que** la communication est réalisée sur les fréquences internes selon le principe DECT.

17. Procédé selon l'une quelconque des revendications précédentes, **caractérisé en ce que** la station intermédiaire (3) communique en supplément avec un réseau fixe.

18. Procédé selon l'une quelconque des revendications précédentes, **caractérisé en ce que** la station intermédiaire (3) peut commuter entre le réseau fixe et le réseau radio.

19. Procédé selon l'une quelconque des revendications 17-18, **caractérisé en ce que** le réseau fixe est un réseau ISDN (ISDN = Integrated Services Digital Netwok).

20. Procédé selon l'une quelconque des revendications 17-18, **caractérisé en ce que** le réseau fixe est un réseau PSTN (PSTN = Public Switched Telephone Network).
